(19) Europäisches Patentamt
European Patent Office
Office européen des brevets

(11) Veröffentlichungsnummer : **0 288 845 B1**

(12) # EUROPÄISCHE PATENTSCHRIFT

(45) Veröffentlichungstag der Patentschrift : **17.04.91 Patentblatt 91/16**

(51) Int. Cl.$^5$ : **C08F 4/64,** C08F 10/06

(21) Anmeldenummer : **88106087.5**

(22) Anmeldetag : **16.04.88**

(54) **Verfahren zum Herstellen von Homo-und Copolymerisaten des Propens mittels eines Ziegler-Natta-Katalysatorsystems.**

(30) Priorität : **25.04.87 DE 3713943**

(43) Veröffentlichungstag der Anmeldung : **02.11.88 Patentblatt 88/44**

(45) Bekanntmachung des Hinweises auf die Patenterteilung : **17.04.91 Patentblatt 91/16**

(84) Benannte Vertragsstaaten : **AT BE DE ES FR GB IT NL**

(56) Entgegenhaltungen :
**EP-A- 0 014 523**
**EP-A- 0 045 977**
**EP-A- 0 173 485**

(73) Patentinhaber : **BASF Aktiengesellschaft**
**Carl-Bosch-Strasse 38**
**W-6700 Ludwigshafen (DE)**

(72) Erfinder : **Kerth, Juergen, Dr.**
**Wattenheimer Strasse 15**
**W-6719 Carlsberg (DE)**
Erfinder : **Zolk, Ralf, Dr.**
**Gerhard-Hauptmann-Strasse 33**
**W-6717 Hessheim (DE)**
Erfinder : **Werner, Rainer Alexander, Dr.**
**Salinenstrasse 143**
**W-6702 Bad Duerkheim (DE)**
Erfinder : **Schweier, Guenther, Dr.**
**Friedrich-Pietzsch-Strasse 14**
**W-6701 Friedelsheim (DE)**

EP 0 288 845 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die vorliegende Erfindung betrifft ein Verfahren zum Herstellen von Homopolymerisaten des Propens sowie Copolymerisaten des Propens mit untergeordneten Mengen anderer $C_2$- bis $C_{12}$-, insbesondere $C_2$- bis $C_6$-α-Monoolefine durch Polymerisation, insbesondere durch Trockenphasenpolymerisation, des bzw. der Monomeren bei Temperaturen von 20 bis 160, insbesondere 50 bis 120°C und Drücken von 1 bis 100, insbesondere 20 bis 70 bar, mittels eines Ziegler-Natta-Katalysatorsystems aus

(1) einer Titankomponente, die auf einem feinteiligen, formgebenden Kieselgel basiert und, neben Titan, Magnesium, Chlor sowie ein Benzolcarbonsäurederivat enthält,

(2) einer Aluminiumkomponente der Formel

$$Al\ R_3,$$

worin steht R für einen nicht mehr als 8, insbesondere nicht mehr als 4 Kohlenstoffatome aufweisenden Alkylrest,

sowie

(3) einer Silankomponente der Formel

$$R^1_n\ Si(OR^2)_{4-n},$$

worin stehen $R^1$ für einen nicht mehr als 16, vorzugsweise nicht mehr als 10 Kohlenstoffatome aufweisenden Kohlenwasserstoffrest gesättigt-aliphatischer und/oder aromatischer Natur, $R^2$ für einen nicht mehr als 15, vorzugsweise nicht mehr als 8, und insbesondere nicht mehr als 4 Kohlenstoffatome aufweisenden Alkylrest, und n für eine Zahl von 0 bis 3, vorzugsweise von 0 bis 2, und insbesondere die Zahl 1, mit den Maßgaben, daß das Atomverhältnis Titan aus der Titankomponente (1) : Aluminium aus der Aluminiumkomponente (2) 1 : 10 bis 1 : 800, insbesondere 1 : 20 bis 1 : 200, und das Molverhältnis Aluminiumkomponente (2) : Silankomponente (3) 1 : 0,03 bis 1 : 0,8, insbesondere 1 : 0,05 bis 1 : 0,5 beträgt.

Polymerisationsverfahren dieser Art sind bekannt ; ihre Besonderheit gegenüber vergleichbaren anderen Verfahren liegt in der speziellen Ausgestaltung des Katalysatorsystems, wobei als Prototypen für den vorliegenden Fall die aus den EP-OSen 0 014 523, 0 045 977, 0 171 200 und 0 195 497 sowie den GB-PSen 2 101 609 und 2 101 611 bekannten Verfahren genannt werden können.

Die speziellen Ausgestaltungen der Katalysatorsysteme werden vorgenommen, um bestimmte Ziele zu erreichen, wie die folgenden :

Das Katalysatorsystem soll leicht herstellbar sein und eine hohe Ausbeute an Polymerisat liefern, welches einen möglichst großen isotaktischen Anteil zu enthalten hat. Das Katalysatorsystem soll darüber hinaus Polymerisate mit speziellen morphologischen Eigenschaften erzeugen, etwa im Sinne einer einheitlichen Korngröße und/oder einer Verringerung der Feinstkornanteile und/oder eines hohen Schüttgewichts. Neben diesen für die Beherrschung der Polymerisationssysteme, die Aufarbeitung der Polymerisate und/oder ihre Verarbeitung wichtigen Parametern ist auch ein niedriger Halogengehalt des Polymerisats – besonders im Hinblick auf Korrosionsprobleme – von Bedeutung, was durch Steigerung der Polymerausbeute und/oder ein Katalysatorsystem zu erreichen ist, welches möglichst wenig Halogen enthält.

Manche dieser Ziele sind nach dem Stand der Technik nur mit sehr aufwendigen Verfahren zu erreichen, oder dann, wenn man andere Ziele zurücksetzt :

So wird z.B. in der EP-OS 0 045 977 ein Katalysatorsystem, bestehend aus "aktivem" $MgCl_2$, $TiCl_4$ und einem Phthalsäurederivat, beschrieben. Mit Kieselgel als formgebendem Trägermaterial ist die Produktivität des Katalysatorsystems jedoch nicht mehr befriedigend ; auch ist der Chlorgehalt der Polymerisate vergleichsweise hoch.

In den EP-OSen 0 014 523 und 0 171 200 sowie den GB-PSen 2 101 609 und 2 101 611 werden Katalysatorsysteme beschrieben, deren Titankomponente durch Behandeln eines festen, anorganischen Oxids mit einer organischen Magnesiumverbindung, einer Lewis-Base und Titantetrachlorid erhalten wird, wobei zusätzlich ein Halogenierungsmittel, das kein Titantetrachlorid ist und/oder eine organische Verbindung der Metalle Bor, Aluminium, Silicium oder Zinn oder ein Bortrihalogenid oder ein Halogenatome enthaltender Alkohol eingesetzt werden muß. Trotz aufwendiger und langwieriger Herstellungsweise ist die Produktivität des entsprechenden Katalysatorsystems nicht befriedigend.

In der EP-OS 0 195 497 wird ein Katalysatorsystem beschrieben, dessen Titankomponente durch Behandeln von $SiO_2$ mit einer organischen Mg-Verbindung, einem Alkohol, einer Lewis-Base und $TiCl_4$ erhalten wird.

Auch bei diesem Katalysatorsystem ist die Produktivität gering.

Die bekannten Verfahren lassen somit Wünsche offen, insbesondere was eine gute Produktivität und einen geringen Chlorgehalt in den Polymerisaten bei zugleich hoher Isotaktizität und guter Morphologie betrifft.

Hier setzt die Aufgabenstellung der vorliegenden Erfindung an, nämlich eine Titankomponente zu schaffen, die gegenüber den Verfahren des Standes der Technik bei guter Produktivität zugleich Polymerisate mit geringem Chlorgehalt, hoher Isotaktizität und guter Morphologie zu liefern vermag.

Es wurde gefunden, daß die gestellte Aufgabe gelöst werden kann mit einem Katalysatorsystem, das eine aus (I) einem speziellen Trägerstoff, der in definierter Weise aus (Ia) einem bestimmten feinteiligen Kieselgel, (Ib) einer bestimmten magnesiumorganischen Verbindung und (Ic) einem bestimmten gasförmigen Chlorierungsmittel erhalten worden ist, sowie (II) einem bestimmten Alkanol, (III) Titantetrachlorid sowie (IV) einem speziell ausgewählten Phthalsäureabkömmling in besonderer Weise hergestellte Titankomponente (1) enthält.

Gegenstand der vorliegenden Erfindung ist dementsprechend ein Verfahren zum Herstellen von Homopolymerisaten des Propens sowie Copolymerisaten des Propens mit untergeordneten Mengen anderer $C_2$- bis $C_{12}$-, insbesondere $C_2$-bis $C_6$-$\alpha$-Monoolefine durch Polymerisation, insbesondere durch Trockenphasenpolymerisation, des bzw. der Monomeren bei Temperaturen von 20 bis 160, insbesondere 50 bis 120°C und Drücken von 1 bis 100, insbesondere 20 bis 70 bar, mittels eines Ziegler-Natta-Katalysatorsystems aus

(1) einer Titankomponente, die auf einem feinteiligen, formgebenden Kieselgel basiert und, neben Titan, Magnesium, Chlor sowie ein Benzolcarbonsäurederivat enthält,

(2) einer Aluminiumkomponente der Formel

$$Al\ R_3,$$

worin steht R für einen nicht mehr als 8, insbesondere nicht mehr als 4 Kohlenstoffatome aufweisenden Alkylrest,

sowie

(3) einer Silankomponente der Formel

$$R^1_n\ Si(OR^2)_{4-n}\quad ,$$

worin stehen $R^1$ für einen nicht mehr als 16, vorzugsweise nicht mehr als 10 Kohlenstoffatome aufweisenden Kohlenwasserstoffrest gesättigt-aliphatischer und/oder aromatischer Natur $R^2$ für einen nicht mehr als 15, vorzugsweise nicht mehr als 8, und insbesondere nicht mehr als 4 Kohlenstoffatome aufweisenden Alyklrest, und n für eine Zahl von 0 bis 3, vorzugsweise von 0 bis 2, und insbesondere die Zahl 1,

mit den Maßgaben, daß das Atomverhältnis Titan aus der Titankomponente (1) : Aluminium aus der Aluminiumkomponente (2) 1 : 10 bis 1 : 800, insbesondere 1 : 20 bis 1 : 200 und das Molverhältnis Aluminiumkomponente (2) : Silankomponente (3) 1 : 0,03 bis 1 : 0,8, insbesondere 1 : 0,05 bis 1 : 0,5 beträgt.

Das erfindungsgemäße Verfahren ist dadurch gekennzeichnet, daß man als Titankomponente (1) eine solche einsetzt, die erhalten wird, indem man zunächst

(1.1) in einer ersten Stufe (I) einen Trägerstoff herstellt aus (Ia) einem feinteiligen Kieselgel, das das einen Teilchendurchmesser von 1 bis 1000, insbesondere 10 bis 400 µm, ein Porenvolumen von 0,3 bis 3, insbesondere 1 bis 2,5 $cm^3/g$ sowie eine Oberfläche von 100 bis 1000, insbesondere 200 bis 400 $m^2/g$ besitzt und die Formel $SiO_2 \cdot a\ Al_2O_3$ - worin a steht für eine Zahl im Bereich von 0 bis 2, insbesondere 0 bis 0,5 -hat, (Ib) einer magnesiumorganischen Verbindung der Formel $MgR^3R^4$ – worin $R^3$ und $R^4$ stehen für einen $C_2$- bis $C_{10}$-, vorzugsweise $C_4$- bis $C_8$-Alkylrest – und (Ic) einem gasförmigen Chlorierungsmittel der Formel ClZ -worin Z steht für Cl oder H, vorzugsweise H –, derart, daß man zuerst

(1.1.1) in einer ersten Unterstufe in einem flüssigen inerten Kohlenwasserstoff, insbesondere einem Alkan, unter ständiger Durchmischung bei Raumtemperatur das feinteilige Kieselgel (Ia) und die magnesiumorganische Verbindung (Ib) zusammenbringt, wobei mengenmäßig eingesetzt werden auf 10 Molteile Silicium des Kieselgels (Ia) 1 bis 10, insbesondere 1,5 bis 4 Molteile der magnesiumorganischen Verbindung (Ib), und das Zusammengebrachte während 0,5 bis 5, insbesondere 1 bis 2 Stunden bei einer Temperatur im Bereich von 20 bis 140, insbesondere 60 bis 90°C, hielt, dann

(1.1.2) in einer zweiten Unterstufe unter ständiger Durchmischung bei einer Temperatur im Bereich von–20 bis+80, insbesondere 0 bis +20°C, in das aus der ersten Unterstufe Erhaltene das gasförmige Chlorierungsmittel (Ic) einleitet, wobei mengenmäßig eingesetzt werden auf 1 Molteil der magnesiumorganischen Verbindung (IIb) 2 bis 40, insbesondere 10 bis 20 Molteile des Chlorierungsmittels (Ic), das Ganze 0,5 bis 5, insbesondere 0,5 bis 1 Stunden bei einer Temperatur in dem genannten Bereich beläßt und das dabei

resultierende festphasige Produkt -d.i. den Trägerstoff (I) – unter Abtrennung der flüssigen Phase isoliert, daraufhin

(1.2) in einer zweiten Stufe ein festphasiges Zwischenprodukt herstellt aus (I) dem in der ersten Stufe erhaltenen Trägerstoff, (II) einem $C_2$- bis $C_6$-Alkanol, insbesondere Ethanol, (III) Titantetrachlorid sowie (IV) einem Phthalsäureabkömmling der Formel

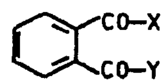

worin stehen X und Y gemeinsam für Sauerstoff oder X sowie Y für Chlor oder einen $C_1$- bis $C_{10}$-, vorzugsweise $C_2$- bis $C_8$-Alkoxyrest, insbesondere für einen Butoxyrest, derart, daß man zuerst

(1.2.1) in einer ersten Unterstufe in einem flüssigen inerten Kohlenwasserstoff, insbesondere einem Alkan, unter ständiger Durchmischung bei Raumtemperatur den Trägerstoff (I) und den Alkanol (II) zusammenbringt, wobei mengenmäßig eingesetzt werden auf 1 Molteile Magnesium des Trägerstoffs (I) 1 bis 5, insbesondere 2,5 bis 3,5 Molteile des Alkanols (II), und das Zusammengebrachte während 0,5 bis 5, insbesondere 1 bis 2 Stunden bei einer Temperatur im Bereich von 20 bis 140, insbesondere 70 bis 90°C hält, anschließend

(1.2.2.) in einer zweiten Unterstufe unter ständiger Durchmischung bei Raumtemperatur in das aus der ersten Unterstufe resultierende Reaktionsgemisch das Titantetrachlorid (III) einbringt, wobei mengenmäßig eingesetzt werden auf 1 Molteil Magnesium des Trägerstoffs (I) 2 bis 20, insbesondere 4 bis 8 Molteile des Titantetrachlorids (III), das Zusammengebrachte während 0,5 bis 5, insbesondere 1 bis 2 Stunden auf einer Temperatur im Bereich von 10 bis 150, insbesondere 90 bis 120°C hält und das dabei resultierende festphasige Zwischenprodukt unter Abtrennung der flüssigen Phase isoliert,

mit der Maßgabe, daß zumindest im Zuge einer der Unterstufen (1.2.1) oder (1.2.2) der Phthalsäureabkömmling (IV) eingebracht wird, wobei mengenmäßig eingesetzt werden auf 1 Molteil Magnesium des Trägerstoffs (I) 0,01 bis 1, vorzugsweise 0,1 bis 0,4, insbesondere 0,25 bis 0,30 Molteile des Phthalsäureabkömmlings (IV), dann

(1.3) in einer dritten Stufe das aus der zweiten Stufe erhaltene festphasige Zwischenprodukt bei einer Temperatur im Bereich von 100 bis 150, insbesondere 115 bis 135°C, während einer Zeitspanne von 0,2 bis 5, insbesondere 1,5 bis 3 Stunden einer ein-oder mehrstufigen oder kontinuierlichen Extraktion mit Titantetrachlorid oder einer Mischung aus Titantetrachlorid und Ethylbenzol, deren Gewichtsanteil an Titantetrachlorid mindestens 10, insbesondere mindestens 20 Gew.-%, beträgt, unterzieht, wobei mengenmäßig eingesetzt werden auf 10 Gewichtsteile des aus der zweiten Stufe erhaltenen festphasigen Zwischenprodukts insgesamt 10 bis 1000, vorzugsweise 20 bis 800, insbesondere 150 bis 300 Gewichtsteile des Extraktionsmittels, und schließlich

(1.4) in einer vierten Stufe das in der dritten Stufe entstandene festphasige Produkt solange mit einem flüssigen inerten Kohlenwasserstoff, insbesondere einem Alkan, wäscht, bis der Kohlenwasserstoff praktisch kein Titantetrachlorid mehr aufnimmt – und derart die Titankomponente (1) gewinnt.

Wie sich gezeigt hat, läßt sich das erfindungsgemäße Verfahren mit besonders gutem Erfolg durchführen, wenn ein Katalysatorsystem eingesetzt wird, dessen Silankomponente (3) eine solche ist, in deren Formel

$$R^1_n\ Si(OR^2)_{4-n}$$

stehen $R^1$ für einen Phenyl- oder $C_1$- bis $C_4$-Alkylphenylrest, vor allem einen Methyl-phenyl- oder Ethyl-phenylrest, $R^2$ für einen nicht mehr als 4 Kohlenstoffatome aufweisenden Alkylrest, vor allem einen Methyl- oder Ethylrest, und n für die Zahl 1 oder 2

Zu dem erfindungsgemäßen Verfahren ist im einzelnen das folgende zu bemerken :

Das Polymerisationsverfahren als solches kann - unter Beachtung der kennzeichnenden Besonderheit – in praktisch allen einschlägig üblichen technologischen Ausgestaltungen durchgeführt werden, etwa als diskontinuierliches, taktweises oder – insbesondere – kontinuierliches Verfahren, sei es z.B. als Suspensionspolymerisationsverfahren oder – insbesondere – Trockenphasenpolymerisationsverfahren. Die erwähnten technologischen Ausgestaltungen – mit anderen Worten : die technologischen Varianten der Polymerisation von α-Monoolefinen nach Ziegler-Natta – sind aus der Literatur und Praxis wohlbekannt, so daß sich nähere Ausführungen zu ihnen erübrigen.

Der Vollständigkeit halber ist zu erwähnen, daß sich beim erfindungsgemäßen Verfahren auch die Molekulargewichte der Polymerisate durch die einschlägig üblichen Maßnahmen regeln lassen, z.B. mittels Reglern, wie insbesondere Wasserstoff.

Was die stoffliche Seite des neuen Katalysatorsystems betrifft, ist im einzelnen das folgende zu sagen :

(1) Das zur Herstellung der Titankomponente einzusetzende kleinteilige Kieselgel (Ia) wird im allgemeinen ein Alumosilikat oder – insbesondere – ein Siliciumdioxid sein ; wichtig ist, daß es die geforderten Eigenschaften besitzt. Wie sich gezeigt hat, sind die der gegebenen Spezifikation entsprechenden im Handel erhältlichen, für Trägerstoffe einschlägig üblichen Kieselgele gut geeignet.

Die gleichfalls einzusetzende magnesiumorganische Verbindung (Ib) kann z.B. Dibutylmagnesium, Dihexylmagnesium und insbesondere Butyloctylmagnesium sein.

Das ferner einzusetzende gasförmige Chlorierungsmittel (Ic) sollte möglichst trocken und rein sein ; es besteht aus Chlor oder insbesondere Chlorwasserstoff.

Der als Hilfsstoff dienende flüssige inerte Kohlenwasserstoff kann ein Kohlenwasserstoff der Art sein, die üblicherweise mit Titankomponenten für Katalysatorsysteme des Ziegler-Natta-Typs ohne Schaden für das Katalysatorsystem bzw. dessen Titankomponente zusammengebracht wird. Als Beispiele für geeignete Kohlenwasserstoffe seien genannt : Pentane, Hexane, Heptane, Benzine und Cyclohexan.

Die zur Herstellung der Titankomponente (1) einzusetzenden Alkanole (II) können handelsübliche sein ; sie sollten vorteilhafterweise relativ hohe Reinheitsgrade aufweisen. Gut geeignet sind z.B. Ethanol, n-Propyl-, i-Propyl-, n-Butyl-, i-Butyl- oder tert.-Butylalkohol ; besonders geeignet ist Ethanol.

Das zur Herstellung der Titankomponente (1) ebenfalls einzusetzende Titantetrachlorid (III) sollte ein bei Ziegler-Natta-Katalysatorsystemen übliches sein ; das gegebenenfalls im Gemisch mit dem Titantetrachlorid einzusetzende Ethylbenzol sollte möglichst rein und trocken sein.

Auch der einzusetzende, oben näher definierte Phthalsäureabkömmling (IV) kann ein handelsüblicher sein ; er sollte vorteilhafterweise einen hohen Reinheitsgrad aufweisen. Wie sich gezeigt hat, ist für den erfindungsgemäßen Zweck ganz besonders gut geeignet der Phthalsäuredibutylester ; aber auch andere Pthalsäuredialkylester sowie Phthalsäureanhydrid und Phthalsäuredichlorid sind geeignet.

Der zur Herstellung der Titankomponente (1) in Stufe (1.4) einzusetzende Kohlenwasserstoff kann ebenfalls ein üblicher sein ; er sollte vorteilhafterweise einen relativ hohen Reinheitsgrad aufweisen.

Die Herstellung der Titankomponente (1) ist einfach und für den Fachmann ohne Erläuterungen möglich. Zu den Stufen (1.1), (1.2) und (1.3) ist lediglich zu erwähnen, daß die Isolierung des jeweils resultierenden Feststoffs zweckmäßigerweise durch Absaugen erfolgt.

(2) Als Aluminiumkomponenten (2) mit der angegebenen Formel kommen die einschlägig üblichen, dieser Formel gehorchenden in Betracht ; sie sind aus Literatur und Praxis so wohlbekannt, daß auf sie nicht näher eingegangen zu werden braucht. Als herausragender Vertreter sei beispielsweise genannt Triethylaluminium.

(3) Die das Katalysatorsystem vervollständigende Silankomponente (3) ist insbesondere ein Trialkoxy(alkyl)phenylsilan oder ein Dialkoxydi(alkyl)phenylsilan der angegebenen Formel. Als herausragender Vertreter ist zu nennen das Triethoxytoluylsilan ; ferner seien beispielsweise genannt Triethoxyethyl-phenylsilan, Dimethoxyditoluylsilan sowie Diethoxyditoluylsilan.

Das erfindungsgemäße Verfahren erlaubt es, Homo- und Copolymerisate, z.B. des binären oder ternären Typs, – auch Blockcopolymerisate – des Propens mit untergeordneten Mengen anderer $C_2$- bis $C_{12}$-$\alpha$-Monoolefine in vorteilhafter Weise herzustellen, wobei besonders geeignete zu polymerisierende $\alpha$-Monoolefine als Comonomere Ethen, Buten-1, 4-Methylpenten-1 und Hexen-1 sind ; es eignen sich aber auch z.B. n-Okten-1, n-Decen-1 sowie n-Dodecen-1.

Beispiel 1

Herstellen der Titankomponente (1)

Es wird so verfahren, daß man zunächst

(1.1) in einer ersten Stufe (I) einen Trägerstoff herstellt aus (Ia) einem feinteiligen Kieselgel, das einen Teilchendurchmesser von 20 bis 45 µm, ein Porenvolumen von 1,75 $cm^3/g$ sowie eine Oberfläche von 320 $m^2/g$ besitzt und die Formel $SiO_2$ hat, (Ib) Butyl-octylmagnesium und (Ic) Chlorwasserstoff, derart, daß man zuerst

(1.1.1) in einer ersten Unterstufe in n-Heptan, unter ständiger Durchmischung mittels Rühren bei Raumtemperatur das feinteilige Kieselgel (Ia) und die magnesiumorganische Verbindung (Ib) zusammenbringt, wobei mengenmäßig eingesetzt werden auf 10 Molteile Silicium des Kieselgels (Ia) 2,5 Molteile der magnesiumorganischen Verbindung (Ib), und das Zuammengebrachte während 1,5 Stunden bei

einer Temperatur im Bereich von 90°C hält, dann

(1.1.2) in einer zweiten Unterstufe unter ständiger Durchmischung mittels Rühren bei einer Temperatur im Bereich von 10°C in das aus der ersten Unterstufe Erhaltene gasförmige Chlorierungsmittel (Ic) einleitet, wobei mengenmäßig eingesetzt werden auf 1 Molteil der magnesiumorganischen Verbindung (Ib) 10 Molteile des Chlorierungsmittels (Ic), das Ganze 0,5 Stunden bei einer Temperatur in dem genannten Bereich beläßt und das dabei resultierende festphasige Produkt - d.i. den Trägerstoff (I) -unter Abtrennung der flüssigen Phase isoliert, daraufhin

(1.2) in einer zweiten Stufe ein festphasiges Zwischenprodukt herstellt aus (I) dem in der ersten Stufe erhaltenen Trägerstoff, (II) Ethanol (III) Titantetrachlorid sowie (IV) Phthalsäuredi-n-butylester, derart, daß man zuerst

(1.2.1) in einer ersten Unterstufe in n-Heptan unter ständiger Durchmischung mittels Rühren bei Raumtemperatur den Trägerstoff (I) und das Ethanol (II) zusammenbringt - wobei mengenmäßig eingesetzt werden auf 1 Molteil Magnesium des Trägerstoffs (I) 3 Molteile des Ethanols (II) - und das Zusammengebrachte während 1,5 Stunden bei einer Temperatur im Bereich von 80°C hält, anschließend

(1.2.2) in einer zweiten Unterstufe unter ständiger Durchmischung mittels Rühren bei Raumtemperatur in das aus der ersten Unterstufe resultierende Reaktionsgemisch das Titantetrachlorid (III) einbringt – wobei mengenmäßig eingesetzt werden auf 1 Molteil Magnesium des Trägerstoffs (I) 6 Molteile des Titantetrachlorids (III) – anschließend den Phthalsäuredi-n-butylester einbringt – wobei mengenmäßig eingesetzt werden auf 1 Molteil Magnesium des Trägerstoffs (I) 0,30 Molteile des Phthalsäureesters (IV) – das aus der ersten Unterstufe Erhaltene – das Zusammengebrachte unter Rühren während 2 Stunden auf einer Temperatur im Bereich von 120°C hält, und das dabei resultierende festphasige Zwischenprodukt unter Abtrennung der flüssigen Phase mittels Absaugen isoliert, dann

(1.3) in einer dritten Stufe das aus der zweiten Stufe erhaltene festphasige Zwischenprodukt bei einer Temperatur von 125°C während einer Zeitspanne von 2 Stunden einer kontinuierlichen Extraktion mit Titantetrachlorid unterzieht - wobei mengenmäßig eingesetzt werden auf 10 Gew.-Teile des aus der zweiten Stufe erhaltenen festphasigen Zwischenprodukts 140 Gew.-Teile des Titantetrachlorids - hierauf das entstandene festphasige Zwischenprodukt mittels Filtration isoliert und schließlich

(1.4) in einer vierten Stufe das in der dritten Stufe gewonnene festphasige Produkt solange mit n-Heptan wäscht, bis das n-Heptan praktisch kein Titantetrachlorid mehr aufnimmt - und derart die Titankomponente (1) gewinnt ; sie enthält 3,5 Gew.-% Titan, 6,0 Gew.-% Magnesium und 23 Gew.-% Chlor.

Polymerisation

Ein Stahlautoklav von 10-1-Volumen, ausgerüstet mit einem Rührer, wird mit 50 g Polypropenpulver, 10 mMol Aluminiumtriethyl (in Form einer 1-molaren Lösung in n-Heptan) als Aluminiumkomponente (2), 1 mMol Triethoxyphenylsilan (in Form einer 1-molaren Lösung in n-Heptan) als Silankomponente (3), 5 Normalliter Wasserstoff und schließlich 100 mg (≙0,07 mMol Titan), der oben beschriebenen Titankomponente (1) bei 30°C beschickt. Die Reaktortemperatur wird binnen 10 Minuten auf 70°C, der Reaktordruck mittels Aufpressen von gasförmigem Propen in dieser Zeit auf 28 bar gebracht.

Die eigentliche Polymerisation wird unter ständigem Rühren bei 70°C und 28 bar während 2 Stunden durchgeführt, hierbei verbrauchtes Monomer wird kontinuierlich durch frisches ersetzt.

Die Produktivität der Katalysatorkomponente (1), der heptanlösliche Anteil (als Maß für die Isotaktizität) und die Kornverteilung des dabei erhaltenen Polymerisats sind in der nachstehenden Tabelle zusammengestellt.

Beispiel 2

Es wird verfahren wie in Beispiel 1, mit der einzigen Ausnahme, daß als Silankomponente (3) die gleiche Molmenge Dimethoxyditoluylsilan eingesetzt wird.

Zum so erhaltenen Polymerisationsergebnis siehe ebenfalls die nachstehende Tabelle.

Vergleichsversuch

Herstellen der Titankomponente

Es wird verfahren wie im Beispiel 1 der EP-OS 0 195 497.

Man erhält eine Titankomponente, die 3,6 Gew.-% Titan, 4,4 Gew.-% Magnesium und 16 Gew.-% Chlor enthält.

Polymerisation

Sie erfolgt wie im Beispiel 1, jedoch nicht mit der dort beschriebenen Titankomponente, sondern mit der gleichen Molmenge der vorstehend bezeichneten Titankomponente.

Zum dabei erreichten Polymerisationsergebnis siehe wiederum die nachstehende Tabelle.

| | Produktivität (g PP/g Kat.) | Heptanlösliche Anteile (Gew.-%) | Kornverteilung (mm) | | | | | Chlorgehalt im Produkt (ppm) |
|---|---|---|---|---|---|---|---|---|
| | | | <0,25 | 0,25-0,5 | 0,5-1 | 1-2 | >2 | |
| Beispiel 1 | 10 900 | 1,9 | 4,1 | 10,6 | 53 | 30,8 | 1,5 | 21 |
| Beispiel 2 | 13 100 | 2,0 | 3,6 | 11,1 | 49 | 34,5 | 1,8 | 17,5 |
| Vergleichsversuch | 3 500 | 4,0 | 3,0 | 29,8 | 54 | 12,2 | 1,0 | 46 |

Wie aus der Tabelle zu ersehen ist, weist die Katalysatorkomponente aus dem Vergleichsversuch eine wesentlich geringere Produktivität und Stereospezifität auf als die Katalysatorkomponenten aus den erfindungsgemäßen Beispielen. Darüber hinaus ist die Kornverteilung in einen Bereich unerwünscht großer Partikel verschoben.

## Ansprüche

1. Verfahren zum Herstellen von Homopolymerisaten des Propens sowie Copolymerisaten des Propens mit untergeordneten Mengen anderer $C_2$- bis $C_{12}$-$\alpha$-Monoolefine durch Polymerisation des bzw. der Monomeren bei Temperaturen von 20 bis 160°C und Drücken von 1 bis 100 bar mittels eines Ziegler-Natta-Katalysatorsystems aus

(1) einer Titankomponente, die auf einem feinteiligen, formgebenden Kieselgel basiert und, neben Titan, Magnesium, Chlor sowie ein Benzolcarbonsäurederivat enthält,

(2) einer Aluminiumkomponente der Formel

$$Al\ R_3,$$

worin steht R für einen nicht mehr als 8 Kohlenstoffatome aufweisenden Alkylrest, sowie

(3) einer Silankomponente der Formel

$$R^1_n\ Si(OR^2)_{4-n}$$

worin stehen $R^1$ für einen nicht mehr als 16 Kohlenstoffatome aufweisenden Kohlenwasserstoffrest gesättigt-aliphatischer und/oder aromatischer Natur, $R^2$ für einen nicht mehr als 15 Kohlenstoffatome aufweisenden Alkylrest, und n für eine Zahl von 0 bis 3,

mit den Maßgaben, daß das Atomverhältnis Titan aus der Titankomponente (1) : Aluminium aus der Aluminiumkomponente (2) 1 : 10 bis 1 : 800 und das Molverhältnis Aluminiumkomponente (2) : Silankomponente (3) 1 : 0,03 bis 1 : 0,8 beträgt, dadurch gekennzeichnet, daß man als Titankomponente (1) eine solche einsetzt, die erhalten wird, indem man zunächst

(1.1) in einer ersten Stufe (I) einen Trägerstoff herstellt aus (Ia) einem feinteiligen Kieselgel, das einen Teilchendurchmesser von 1 bis 1000 µm, ein Porenvolumen von 0,3 bis 3 $cm^3/g$ sowie eine Oberfläche von 100 bis 1000 $m^2/g$ besitzt und die Formel $SiO_2 \cdot a\ Al_2O_3$ - worin a steht für eine Zahl im Bereich von 0 bis 2 - hat, (Ib) einer magnesiumorganischen Verbindung der Formel $MgR^3R^4$ – worin $R^3$ und $R^4$ stehen für einen $C_2$- bis $C_{10}$-Alkylrest – und (Ic) einem gasförmigen Chlorierungsmittel der Formel ClZ – worin Z steht für Cl oder H –, derart, daß man zuerst

(1.1.1) in einer ersten Unterstufe in einem flüssigen inerten Kohlenwasserstoff unter ständiger Durchmischung bei Raumtemperatur das feinteilige Kieselgel (Ia) und die magnesiumorganische Verbindung (Ib) zusammenbringt, wobei mengenmäßig eingesetzt werden auf 10 Molteile Silicium des Kieselgels (Ia) 1 bis 10 Molteile der magnesiumorganischen Verbindung (Ib), und das Zusammengebrachte während 0,5 bis 5 Stunden bei einer Temperatur im Bereich von 20 bis 140°C hält, dann

(1.1.2) in einer zweiten Unterstufe unter ständiger Durchmischung bei einer Temperatur im Bereich von–20 bis+ 80°C in das aus der ersten Unterstufe Erhaltene das gasförmige Chlorierungsmittel (Ic) einleitet, wobei mengenmäßig eingesetzt werden auf 1 Molteil der magnesiumorganischen Verbindung (Ib) 2 bis 40 Molteile des Chlorierungsmittels (Ic), das Ganze 0,5 bis 5 Stunden bei einer Temperatur in dem genannten Bereich beläßt und das dabei resultierende festphasige Produkt – d.i. den Trägerstoff (I) – unter Abtrennung der flüssigen Phase isoliert, daraufhin

(1.2) in einer zweiten Stufe ein festphasiges Zwischenprodukt herstellt aus (I), dem in der ersten Stufe erhaltenen Trägerstoff, (II) einem $C_1$- bis $C_8$-Alkanol, (III) Titantetrachlorid sowie (IV) einem Phthalsäureabkömmling der Formel

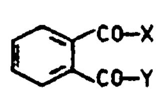

worin stehen X und Y gemeinsam für Sauerstoff oder X sowie Y für Chlor oder einen $C_1$- bis $C_{10}$-Alkoxyrest, derart, daß man zuerst

(1.2.1) in einer ersten Unterstufe in einem flüssigen inerten Kohlenwasserstoff unter ständiger Durchmischung bei Raumtemperatur den Trägerstoff (I) und den Alkanol (II) zusammenbringt, wobei mengenmäßig eingesetzt werden auf 1 Molteil Magnesium des Trägerstoffs (I) 1 bis 5 Molteile des Alkanols (II) und das Zusammengebrachte während 0,5 bis 5 Stunden bei einer Temperatur im Bereich von 20 bis 140°C hält, anschließend

(1.2.2) in einer zweiten Unterstufe unter ständiger Durchmischung bei Raumtemperatur in das aus der ersten Unterstufe resultierende Reaktionsgemisch das Titantetrachlorid (III) einbringt, wobei mengenmäßig eingesetzt werden auf 1 Molteil Magnesium des Trägerstoffs (I) 2 bis 20 Molteile des Titantetrachlorids (III), das Zusammengebrachte während 0,5 bis 5 Stunden auf einer Temperatur im Bereich von 10 bis 150°C hält und das dabei resultierende festphasige Zwischenprodukt unter Abtrennung der flüssigen Phase isoliert,

mit der Maßgabe, daß zumindest im Zuge einer der Unterstufen (1.2.1) bis (1.2.2) der Phthalsäureabkömmling (IV) eingebracht wird, wobei mengenmäßig eingesetzt werden auf 1 Molteil Magnesium des Trägerstoffs (I) 0,01 bis 1 Molteile des Phthalsäureabkömmlings (IV), dann

(1.3) in einer dritten Stufe das aus der zweiten Stufe erhaltene festphasige Zwischenpprodukt bei einer Temperatur im Bereich von 100 bis 150°C während einer Zeitspanne von 0,2 bis 5 Stunden einer ein- oder mehrstufigen oder kontinuierlichen Extraktion mit Titantetrachlorid oder einer Mischung aus Titantetrachlorid und Ethylbenzol, deren Gewichtsanteil an Titantetrachlorid mindestens 10 % beträgt, unterzieht, wobei mengenmäßig eingesetzt werden auf 10 Gewichtsteile des aus der zweiten Stufe erhaltenen festphasigen Zwischenprodukts insgesamt 10 bis 1000 Gew.-Teile des Extraktionsmittels, und schließlich

(1.4) in einer vierten Stufe das in der dritten Stufe entstandene festphasige Produkt solange mit einem flüssigen inerten Kohlenwasserstoff wäscht, bis der Kohlenwasserstoff praktisch kein Titantetrachlorid mehr aufnimmt - und derart die Titankomponente (1) gewinnt.

2. Verfahren gemäß Patentanspruch 1, dadurch gekennzeichnet, daß ein Katalysatorsystem eingesetzt wird, dessen Silankomponente (3) eine solche ist, in deren Formel

$$R^1_n\, Si(OR^2)_{4-n}$$

stehen
$R^1$ für einen Phenyl- oder $C_1$- bis $C_4$-Alkylphenylrest,
$R^2$ für einen nicht mehr als 4 Kohlenstoffatome aufweisenden Alkylrest, und
n für die Zahl 1 oder 2.

3. Verfahren gemäß Patentanspruch 2, dadurch gekennzeichnet, daß ein Katalysatorsystem eingesetzt wird, dessen Silankomponente (3) eine solche ist, in deren Formel

$$R^1_n\, Si(OR^2)_{4-n}$$

stehen
$R^1$ für einen Methyl-phenyl- oder Ethyl-phenylrest
$R^2$ für einen Methyl- oder Ethylrest
n für die Zahl 1 oder 2.

## Claims

1. A process for the preparation of homopolymers of propene and copolymers of propene with minor amounts of other $C_2$-$C_{12}$-$\alpha$-monoolefins by polymerization of the monomer or monomers at from 20 to 160°C and under from 1 to 100 bar using a Ziegler-Natta catalyst system consisting of

(1) a titanium component which is based on a finely divided, shape-imparting silica gel and, in addition to titanium, contains magnesium, chlorine and a benzene-carboxylic acid derivative,

(2) an aluminum component of the formula

$$AlR_3,$$

where R is alkyl of not more than 8 carbon atoms, and
(3) a silane component of the formula

$$R^1_n\,Si(OR^2)_{4-n}$$

where $R^1$ is a saturated aliphatic and/or aromatic hydrocarbon radical of not more than 16 carbon atoms, $R^2$ is alkyl of not more than 15 carbon atoms and n is from 0 to 3,
with the provisos that the atomic ratio of titanium from the titanium component (1) to aluminum from the aluminum component (2) is from 1 : 10 to 1 : 800 and the molar ratio of aluminum component (2) to silane component (3) is from 1 : 0.03 to 1 : 0.8, wherein the titanium component (1) used is one which is obtained by a method in which first
(1.1) in a first stage (I), a carrier is prepared from (Ia) a finely divided silica gel which has a particle diameter of from 1 to 1,000 µm, a pore volume of from 0.3 to 3 $cm^3$ /g and a surface area of from 100 to 1,000$m^2$ /g and is of the formula $SiO_2 \cdot a\,Al_2O_3$, where a is from 0 to 2, (Ib) an organomagnesium compound of the formula $MgR^3R^4$, where $R^3$ and $R^4$ are each $C_2$-$C_{10}$ -alkyl, and (Ic) a gaseous chlorinating agent of the formula ClZ, where Z is Cl or H, by a method in which first

(1.1.1) in a first substage, in a liquid inert hydrocarbon, with constant thorough mixing at room temperature, the finely divided silica gel (Ia) and the organomagnesium compound (Ib) are combined, from 1 to 10 molar parts of the organomagnesium compound (Ib) being used per 10 molar parts of silicon of the silica gel (Ia), and the substances combined are kept at from 20 to 140°C for from 0.5 to 5 hours, then

(1.1.2) in a second substage, with constant thorough mixing at from–20 to+80°C, the gaseous chlorinating agent (Ic) is passed into the product obtained from the first substage, from 2 to 40 molar parts of the chlorinating agent (Ic) being used per molar part of the organomagnesium compound (Ib), the entire mixture is left at a temperature in the stated range for from 0.5 to 5 hours, and the resulting solid-phase product, ie. the carrier (I), is isolated with removal of the liquid phase, thereafter

(1.2) in a second stage, a solid-phase intermediate is prepared from (I) the carrier obtained in the first stage, (II) a $C_1$-$C_8$-alkanol, (III) titanium tetrachloride and (IV) a phthalic acid derivative of the formula

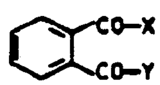

where X and Y together form oxygen or X and Y are each chlorine or $C_1$-$C_{10}$-alkoxy, by a method in which first

(1.2.1) in a first substage, in a liquid inert hydrocarbon and with constant thorough mixing at room temperature, the carrier (I) and the alkanol (II) are combined, from 1 to 5 molar parts of the alkanol (II) being used per molar part of magnesium of the carrier (I), and the substances combined are kept at from 20 to 140°C for from 0.5 to 5 hours, then

(1.2.2) in a second substage, with constant thorough mixing at room temperature, the titanium tetrachloride (III) is introduced into the reaction mixture resulting from the first substage, from 2 to 20 molar parts of the titanium tetrachloride (III) being used per molar part of magnesium of the carrier (I), the substances combined are kept at from 10 to 150°C for from 0.5 to 5 hours, and the resulting solid-phase intermediate is isolated with removal of the liquid phase,

with the proviso that the phtalic acid derivative (IV) is introduced in the course of one or both of the substages (1.2.1) and (1.2.2), from 0.01 to 1 molar part of the phtalic acid derivative (IV) being used per molar part of magenesium of the carrier (I), then

(1.3) in a third stage, the solid-phase intermediate obtained from the second stage is subjected to a single-stage or multi-stage or continuous extraction with titanium tetrachloride or a mixture of titanium tetrachloride and ethylbenzene, containing not less than 10% by weight of titanium tetrachloride, at from 100 to 150°C in the course of from 0.2 to 5 hours, a total of from 10 to 1,000 parts by weight of the extracting agent being used per 10 parts by weight of the solid-phase intermediate obtained from the second stage, and finally
(1.4) in a fourth stage, the solid-phase product formed in the third stage is washed with a liquid inert hydrocarbon until the hydrocarbon takes up virtually no more titanium tetrachloride, and the titanium component (1) is obtained in this manner.

2. A process as claimed in claim 1, wherein a catalyst system is used whose silane component (3) is of the formula

$$R^1_n\ Si(OR^2)_{4-n}$$

where $R^1$ is phenyl or $C_1$-$C_4$-alkylphenyl, $R^2$ is alkyl of not more than 4 carbon atoms and n is 1 or 2.

3. A process as claimed in claim 2, wherein a catalyst system is used whose silane component (3) is of the formula

$$R^1_n\ Si(OR^2)_{4-n}$$

where $R^1$ is methylphenyl or ethylphenyl, $R^2$ is methyl or ethyl and n is 1 or 2.

## Revendications

1. Procédé de préparation d'homopolymères du propylène, ainsi que de copolymères du propylène avec des quantités mineures d'autres α-mono-oléfines en $C_2$ à $C_{12}$, par polymérisation du ou des monomères à des températures de 20 à 160°C et sous des pressions de 1 à 100 bars à l'aide d'un système catalytique de ZieglerNatta constitué par

(1) un composant de titane qui est fixé sur un support de gel de silice finement divisé et qui contient, outre le titane, du magnésium, du chlore et un dérivé d'acide benzènecarboxylique,

(2) un composant d'aluminium de formule

$$Al\ R_3$$

dans laquelle R est mis pour un reste alkyle ne comportant pas plus de 8 atomes de carbone, et

(3) un composant de silane de formule

$$R^1_n\ Si(OR^2)_{4-n}$$

dans laquelle

$R^1$ est mis pour un reste hydrocarboné de nature aliphatique saturée et/ou aromatique, ne comportant pas plus de 16 atomes de carbone,

$R^2$ est mis pour un reste alkyle ne comportant pas plus de 15 atomes de carbone, et

n est mis pour un nombre de 0 à 3,

étant spécifié que le rapport atomique du titane du composant de titane (1) à l'aluminium du composant d'aluminium (2) se situe entre 1 : 10 et 1 : 800 et que le rapport moléculaire du composant d'aluminium (2) au composant de silane (3) se situe entre 1 : 0,03 et 1 : 0,8,caractérisé en ce qu'on utilise, comme composant de titane (1), un composé que l'on obtient

(1.1) dans une première étape (I), en préparant tout d'abord une matière de support à partir de : (Ia) un gel de silice finement divisé qui a un diamètre de particules de 1 à 1000 µm, un volume de pores de 0,3 à 3 cm³/g et une surface de 100 à 1000 m²/g et qui répond à la formule $SiO_2 \cdot a\ Al_2O_3$, a étant mis pour un nombre dans la plage de 0 à 2, (Ib) un composé organomagnésien de formule $MgR^3R^4$, $R^3$ et $^4$ étant mis chacun pour un reste alkyle en $C_2$ à $C_{10}$, et (Ic) un agent de chloration gazeux de formule ClZ, Z étant mis pour Cl ou H, cette préparation étant effectuée

(1.1.1) dans une première sous-étape, en mettant d'abord en contact, dans un hydrocarbure inerte liquide et en mélangeant continuellement à la température ambiante, le gel de silice finement divisé (Ia) et le composé organomagnésien (Ib) à raison de 1 à 10 parties en mol es du composé organomagnésien (Ib) pour 10 parties en moles de silicium du gel de silice (Ia), et en maintenant le mélange pendant 0,5 à 5 h à une température dans la gamme de 20 à 140°C, puis

(1.1.2) dans une seconde sous-étape, en faisant passer l'agent de chloration gazeux (Ic) dans le produit obtenu dans la première sous-étape et maintenu sous mélange continuel à une température dans la gamme de –20+80°C, à raison de 2 à 40 parties en moles de l'agent de chloration (Ic) pour 1 partie en

moles du composé organomagnésien (Ib), en abandonnant le tout pendant 0,5 à 5 h à une température dans la gamme mentionnée, et en isolant le produit en phase solide ainsi résultant – c'est-à-dire la matière de support (I) – avec séparation de la phase liquide, après quoi

(1.2) dans une deuxième étape, en préparant un produit intermédiaire en phase solide à partir de : (I) la matière de support obtenue dans la première étape, (II) un alcanol en $C_1$ à $C_8$, (III) du tétrachlorure de titane et (IV) un dérivé d'acide phtalique de formule

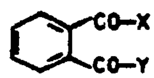

dans laquelle X et Y sont mis en commun pour un atome d'oxygène ou individuellement pour un atome de chlore ou un reste alcoxy en $C_1$ à $C_{10}$, cette préparation étant effectuée

(1.2.1) dans une première sous-étape, en mettant d'abord en contact, dans un hydrocarbure inerte liquide et en mélangeant continuellement à la température ambiante, la matière de support (I) et l'alcanol (II) à raison de 1 à 5 parties en moles de l'alcanol (II) pour 1 partie en moles de magnésium de la matière de support (I), et en maintenant le mélange pendant 0,5 à 5 h à une température dans la gamme de 20 à 140°C, puis

(1. 2. 2) dans une seconde sous-étape, en introduisant le tétrachlorure de titane (III) dans le mélange réactionnel résultant de la première sous-étape et maintenu sous mélange continuel à la température ambiante, à raison de 2 à 20 parties en mole ; du tétrachlorure de titane (III) pour 1 partie en moles de magnésium de la matière de support (I), en maintenant le mélange pendant 0,5 à 5 h à une température dans la gamme de 10 à 150 °C, et en isolant le produit intermédiaire en phase solide ainsi résultant avec séparation de la phase liquide, étant spécifié qu'au cours de l'une au moins des sous-étapes (1.2.1) et (1.2.2), le dérivé d'acide phtalique (IV) est introduit, à raison de 0,01 à 1 partie en moles du dérivé d'acide phtalique (I) pour 1 partie en moles de la matière de support (I), puis

(1.3) dans une troisième étape, en soumettant le produit intermédiaire en phase solide obtenu dans la deuxième étape, à une température dans la gamme de 100 à 150°C et pendant un laps de temps de 0,2 à 5 h, à une extraction en un ou plusieurs temps ou en continu avec du tétrachlorure de titane ou avec un mélange de tétrachlorure de titane et d'éthylbenzène dont la part en poids de tétrachlorure de titane s'élève au moins à 10%, avec utilisation au total de 10 à 1000 parties en poids de l'agent d'extraction pour 10 parties en poids du produit intermédiaire en phase solide obtenu dans la deuxième étape, et enfin

(1.4) dans une quatrième étape, en lavant avec un hydrocarbure inerte liquide le produit en phase solide formé dans la troisième étape, jusqu'à ce que l'hydrocarbure n'entraîne pratiquement plus de tétrachlorure de titane – et on obtient ainsi le composant de titane (1).

2. Procédé selon la revendication 1, caractérisé en ce qu'on utilise un système catalytique dont le comprenant de silane (3) est un composant dans la formule

$$R^1_n Si(OR^2)_{4-n}$$

duquel

$R^1$ est mis pour un reste phényle ou $C_1$-$C_4$-alkylphényle,

$R^2$ est mis pour un reste alkyle ne comportant pas plus de 4 atomes de carbone et

n est mis pour le nombre 1 ou 2.

3. Procédé selon la revendication 2, caractérisé en ce qu'on utilise un système catalytique dont le composant de silane (3) est un composant dans la formule

$$R^1_n Si(OR^2)_{4-n}$$

duquel

$R^1$ est mis pour un reste méthylphényle ou éthylphényle,

$R^2$ est mis pour un reste méthyle ou éthyle,

n est mis pour le nombre 1 ou 2.